(19) Europäisches Patentamt
European Patent Office
Office européen des brevets

(11) Veröffentlichungsnummer: **0 151 704 B1**

(12) **EUROPÄISCHE PATENTSCHRIFT**

(45) Veröffentlichungstag der Patentschrift: **29.05.91**

(51) Int. Cl.⁵: **H04B 17/00**

(21) Anmeldenummer: **84113685.6**

(22) Anmeldetag: **13.11.84**

(54) **Hochleistungs-Sender mit automatischer Steuerung und Ueberwachung.**

(30) Priorität: **15.12.83 CH 6689/83**

(43) Veröffentlichungstag der Anmeldung:
**21.08.85 Patentblatt 85/34**

(45) Bekanntmachung des Hinweises auf die
Patenterteilung:
**29.05.91 Patentblatt 91/22**

(84) Benannte Vertragsstaaten:
**CH DE FR GB LI**

(56) Entgegenhaltungen:
**EP-A- 0 041 668**
**DE-A- 3 116 149**
**US-A- 2 813 242**
**US-A- 4 196 417**
**US-A- 4 326 289**

**BROWN BOVERI REVIEW, Band 64, Nr. 8,**
**August 1977, Seiten 498-505, Baden, CH; R.**
**BÄRTSCHI u.a.: "500-kW short-wave tetrode**
**transmitter"**

**BROWN BOVERI REVIEW, Band 70, Nr. 5/6,**
**Juni/Juli 1983, Seiten 235-240, Baden, CH; P.**
**KOCHER u.a.: "A new 500 kW short-wave**
**transmitter"**

**NEC RESEARCH & DEVELOPMENT, Nr. 61,**
**April 1981, Seiten 8-16, Tokyo, JP; K.**
**AWOYAMA u.a.: "1000 kW medium wave bro-**
**adcast transmitter"**

**Brown Boveri Mitt., Heft 8, 1977, Seiten**
**482-489, R. Bärtschi u.a.: " Der**
**500-kW-Kurzwellen-Tetrodensender" DIN IEC**
**652 Teil 1, Mai 1981**

(73) Patentinhaber: **BBC Brown Boveri AG**
**Haselstrasse**
**CH-5401 Baden(CH)**

(72) Erfinder: **Schminke, Wolfram, Dr.**
**Hirsfeld 2**
**W-7887 Laufenburg(DE)**

## Beschreibung

Die vorliegende Erfindung geht aus von einem Hochleistungs-Sender mit automatischer Steuerung und Ueberwachung gemäss dem Oberbegriff des Anspruchs 1. Ein solcher Hochleistungs-Sender ist beispielsweise aus den Brown Boveri Mitteilungen, Heft 8, 1977, S. 482-489 bekannt.

Bei einem automatisierten Hochleistungs-Sender der bekannten Art, wie er für Rundfunk- aber auch Spezialanwendungen gefertigt wird, werden die verschiedenen Stufen des Senders, Oszillator, Pegelregelung, Treiberstufe, Endstufe, Ausgangskreise und Stromversorgung, durch eine zentrale Sendersteuerung in ihren Betriebsparametern überwacht und so gesteuert, dass die Betriebsparameter möglichst genau ihren vorgegebenen Sollwerten entsprechen. Die Ueberwachung während des Betriebs dient gleichzeitig dazu, Fehler im Sendersystem zu erkennen und entsprechende Gegenmassnahmen, z.B. eine Schnellabschaltung bei Hochspannungsüberschlägen, einzuleiten.

Die automatisierten Steuerungsabläufe umfassen neben der bereits erwähnten Fehlererkennung insbesondere den automatischen Frequenzwechsel, das Aufschalten, d.h. das Hochfahren des Senders in der ersten Phase des Einschaltens, sowie die verschiedenen Eingriffsmöglichkeiten, die für eine Fernsteuerung des Senders notwendig sind.

Der schaltungsmässige Aufwand für die Realisierung der beschriebenen automatischen Steuerung ist wegen der komplexen Steuerungsvorgänge erheblich. Die Steuerung nach dem Stand der Technik ist daher in verschiedene Funktionsblöcke unterteilt, die beispielsweise die anfallenden Messdaten aufnehmen und verarbeiten, die Stellmotoren der regelbaren Induktivitäten und Kapazitäten im Hochfrequenzteil des Senders steuern, die Stromversorgung des Senders beeinflussen oder die im Oszillator erzeugte Trägerfrequenz einstellen und umschalten.

Die verschiedenen Funktionsblöcke der Sendersteuerung sind über einzelne Mess- und Steuerleitungen nach der Art eines sternförmigen Netzes mit den verschiedenen Stufen des Senders verbunden. Dadurch entsteht eine festverdrahtete Steuerungsstruktur, die eine genaue Abstimmung der Steuerungsabläufe untereinander erforderlich macht und eine einfache Anpassung der Sendersteuerung an unterschiedliche Anforderungen erschwert.

Zusätzlich bedingen die unterschiedlichen Signalpegel auf den Mess- und Steuerleitungen erhebliche Abschirmmassnahmen gegen Hochfrequenzeinstreuungen, die im Sendebetrieb durch die Trägerfrequenz oder transiente Vorgänge beim Schalten des Senders entstehen. Insbesondere müssen Leitungen mit analogen Strom- bzw. Spannungssignalen bezüglich der Verdrahtung und Verlegung anders behandelt werden, als Leitungen für digitale Signale mit einem TTL (Transistor-Transistor-Logik)-Pegel von beispielsweise 5 V oder z.B. Relais-Logik-Pegeln von 24 V. Wiederum anders sind die Bedingungen für die der Stellmotor-Steuerung dienenden Wechsel- oder Drehstromkabel.

Dies führt bei einem Hochleistungs-Sender der bekannten Art dazu, dass für jedes Mess- und Steuersignal eine gesonderte Leitung vorgesehen werden muss.

Aufgabe der vorliegenden Erfindung ist es daher, einen Hochleistungs-Sender mit automatischer Steuerung und Ueberwachung zu schaffen, der sich durch erhebliche Vereinfachungen und damit Einsparungen in der Verkabelung innerhalb des Senders auszeichnet und gleichzeitig eine erhöhte Flexibilität in der Steuerung mit einer Verringerung der notwendigen Entstörmassnahmen verbindet.

Die Aufgabe wird bei einem Sender der eingangs genannten Art durch die Merkmale aus dem Kennzeichen des Anspruchs 1 gelöst.

Die erfindungsgemässe Verwendung eines gemeinsamen, seriell arbeitenden Daten- und Adressbus für den Austausch von Daten und Steuerbefehlen zwischen den Mess- und Eingriffsstellen und der Sendersteuerung hat zunächst den wesentlichen Vorteil einer stark vereinfachten Verkabelung zwischen der Sendersteuerung und den einzelnen Senderstufen. Jede der Mess- und Eingriffsstellen ist dabei über einen adressierbaren Daten- und Steuerport mit dem gemeinsamen Daten- und Adressbus verbunden. Die zeitlich gestaffelte Abfrage der Messdaten aus den einzelnen Messstellen und Uebermittlung von Steuerbefehlen an die einzelnen Eingriffsstellen wird von einer zentralen Recheneinheit gesteuert.

Ein weiterer wichtiger Vorteil liegt darin, dass die für den Steuerungsablauf benötigten Daten (Messdaten und Steuerbefehle) aufgrund der zentralen Rechnersteuerung gleichfalls zentral anfallen. Dies führt zu einer Vereinfachung der Fernsteuerung und ermöglicht eine Fernmeldung und zentrale Abspeicherung (Protokollierung) aller auftretenden Daten.

Auch können über die zentrale Recheneinheit alle Steuerorgane in den Eingriffsstellen ferngesteuert werden, so dass ein gleichwertiger Betrieb des Senders von der Fernsteuerkonsole und dem im Sender installierten Terminal aus möglich ist. Unter Umständen muss dieses Terminal nur für die Dauer der Inbetriebnahme im Sender selbst untergebracht werden (mobiles Terminal).

Da die zentrale Recheneinheit weitgehend frei programmierbar ausgeführt werden kann, lässt sich die Steuerung ohne grössere Eingriffe und ohne Begrenzung durch bereits installierte Hardware erweitern, indem einfach das Steuerungsprogramm geändert wird. Darüber hinaus können durch eine Programmänderung die Sendersteuerung auch an spezielle Bedürfnisse beim Betrieb angepasst und systembedingte Messfehler über die Eingabe tabellarisch berechneter Hilfswerte korrigiert werden.

Schliesslich ermöglicht der gemeinsame Daten- und Adressbus eine Konzentration der Abschirmmassnahmen sowie eine vereinfachte Parallelschaltung mehrerer Sender mit vollautomatischer Gesamtsteuerung.

Besonders vorteilhaft hinsichtlich der Störsicherheit ist es, den Daten- und Adressbus gemäss einem bevorzugten Ausführungsbeispiel als Lichtleitfaser auszuführen, weil die optische Datenübertragung gegen magnetische und elektrische Störfelder weitgehend unempfindlich ist.

Die Erfindung soll nun nachfolgend anhand von Ausführungsbeispielen im Zusammenhang mit der Zeichnung näher erläutert werden. Es zeigen:

Fig. 1 einen Hochleistungs-Sender mit automatischer Steuerung und Ueberwachung nach dem Stand der Technik;

Fig. 2 den Aufbau einer Sendersteuerung mit gemeinsamem Daten- und Adressbus nach der Erfindung;

Fig. 3 ein Ausführungsbeispiel für eine mit Lichtenergie versorgte Signalelektronik aus einer Steuerung nach Fig. 2;

Fig. 4 ein weiteres Ausführungsbeispiel für eine mit HF-Energie versorgte Signalelektronik.

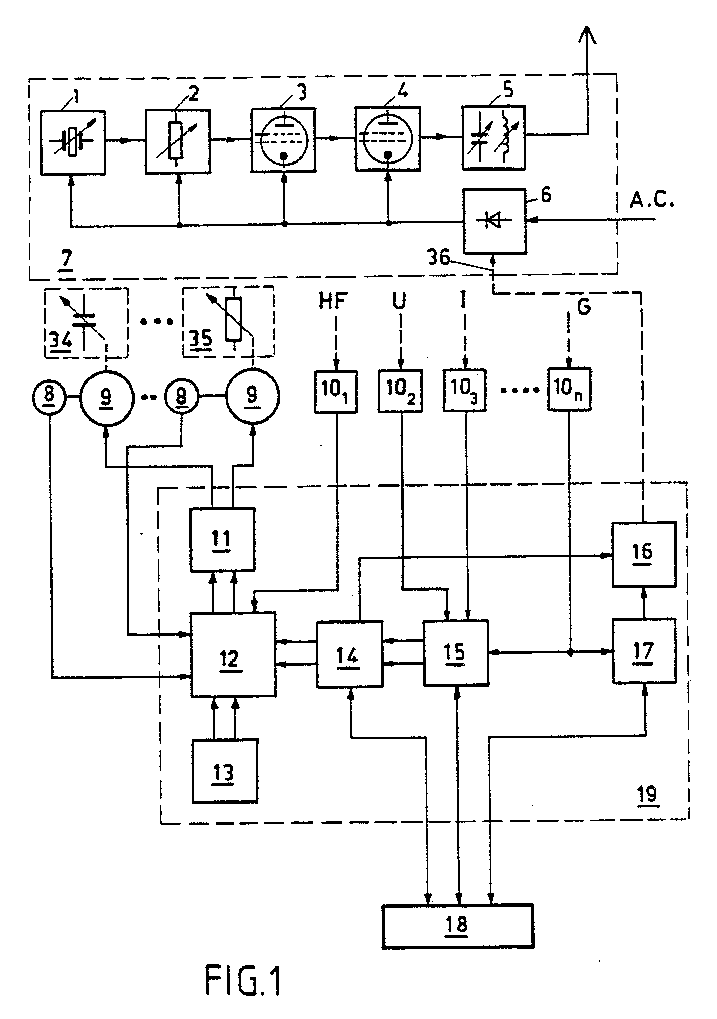

Fig. 1 stellt schematisiert einen Hochleistungs-Sender mit seiner automatisierten Steuerung und Ueberwachung nach dem Stand der Technik dar. Zur Vereinfachung der Darstellung ist die Anordnung aufgeteilt in den eigentlichen Sender 7 und die Sendersteuerung 19. Der Sender 7 umfasst eine Kette von Einzelstufen, beginnend mit einem Oszillator 1 zur Erzeugung der Trägerfrequenz oder einer zur Trägerfrequenz in festem Verhältnis stehenden Referenzfrequenz. Auf den Oszillator 1 folgt eine Pegelregelungsstufe 2, die den Pegel der Trägerschwingung in vorbestimmter Weise beeinflusst.

Der Leistungsteil des Senders 7 enthält eine Treiberstufe 3, eine Endstufe 4 und einen Ausgangskreis 5. Treiberstufe 3 und Endstufe 4, welche die Leistungsverstärkung des Trägersignals übernehmen, sind üblicherweise mit Hochleistungstetroden bestückt und arbeiten mit Spannungen von einigen kV und Strömen von bis zu 100 A, so dass bei Schalt- oder Steuervorgängen in diesen Stufen die Gefahr von induzierten Störspannungen erheblich ist. Der Ausgangskreis 5 enthält eine Vielzahl von einstellbaren frequenzbestimmenden Gliedern zur Abstimmung der Endstufe 4 und zur Anpassung des Senders an die Antenne. Nicht gesondert aufgeführt sind in Fig. 1 die Einrichtungen zur Modulation des Trägersignals, wie sie beispielsweise in einem AM-Rundfunksender Verwendung finden.

Die erforderlichen Betriebsspannungen und -ströme für die einzelnen Senderstufen werden von einer Stromversorgung 6 bereitgestellt, die an ein Wechselspannungs- bzw. Drehstromnetz A.C. angeschlossen ist und üblicherweise einen Gleichrichtertransformator, Hochspannungsgleichrichter, Filtermittel und Einrichtungen zur Regelung der Ausgangsspannungen enthält.

Zur Steuerung und Ueberwachung des Senders 7 werden an einer Vielzahl von Punkten innerhalb des Senders verschiedene charakteristische Betriebsparameter wie z.B. Anoden- und Gitterspannungen, Frequenz, Ströme, HF-Amplituden fortlaufend gemessen und die Ergebnisse der Sendersteuerung 19 zugeführt. Die Sendersteuerung 19 leitet aus diesen Messwerten Steuerbefehle ab, die entweder direkt in die Elektronik beispielsweise des Oszillators 1 oder der Stromversorgung 6 eingreifen, oder aber zur Steuerung von Stellmotoren 9 dienen, welche die wasser-bzw. luftgekühlten hochbelastbaren Abstimmelemente (HF-Spulen, Kondensatoren, Widerstände) in den Leistungsstufen betätigen. Zur Rückmeldung der tatsächlich eingenommenen Stellung dieser Abstimmelemente dienen Positionsgeber 8, die mit den Stellmotoren 9 starr verbunden sind.

Aus dem oben Gesagten geht hervor, dass das Zusammenwirken von Sender 7 und Sendersteuerung 19 über eine Mehrzahl von Messstellen $10_1$ ... $10_n$ und Eingriffsstellen 34, 35, und 36 erfolgt, die in Fig. 1 beispielhaft wiedergegeben sind. Entsprechend den unterschiedlichen Aufgaben sind die verschiedenen Mess- und Eingriffsstellen mit unterschiedlichen Funktionsblöcken innerhalb der Sendersteuerung 19 verbunden. Im Beispiel aus Fig. 1 ist die Messstelle $10_1$ eine Messstelle für Hochfrequenzsignale HF. Sie gibt daher ihre Messwerte an eine Motorsteuerung 12 weiter, die über eine Motorschaltereinheit 11 und die Stellmotoren 9 in den Eingriffsstellen 34 und 35 angeordnete Abstimmelemente betätigt, die z.B. im Ausgangskreis 5 wirken. An die Motorsteuerung 12 melden die Positionsgeber 8 die tatsächlich eingenommene Position der Stellmotore 9 und damit der Abstimmelemente in den Eingriffsstellen 34 und 35 zurück, so dass eine Regelschleife entsteht.

Andere Messstellen $10_2$ und $10_3$ messen Gleichspannungen U und Gleichströme I. Sie sind mit einer Messdatenverarbeitungseinrichtung 15 verbunden, die einerseits Steuersignale an eine Aufschaltsteuerung 14 abgibt und andererseits Daten mit einer Fernsteuerungskonsole 18 austauscht. Die Aufschaltsteuerung 14, die das Hochfahren des Senders bei Betriebsbeginn steuert, tauscht ebenfalls Daten mit der Fernsteuerungskonsole 18 aus. Sie wirkt ausserdem auf eine Stromversorgungssteuerung 16, die über die Eingriffsstelle 36 in der Stromversorgung 6 die Höhe der Versorgungsspannungen und -ströme im Sender beeinflussen kann.

Die Messstelle $10_n$ ist in dem Beispiel aus Fig. 1 als Grenzwertgeber für einen Grenzwert G ausgebildet. Sie gibt Signale an die Messdatenverarbeitungseinrichtung 15, wenn die Ueberschreitung eines vorgegebenen Grenzwerts eine Aenderung dar Betriebsparameter notwendig macht, oder sie veranlasst eine Schnellabschalteinrichtung 17, die Stromversorgung 6 über die Stromversorgungssteuerung 16 abzuschalten, wenn die Grenzwertüberschreitung mit einer akuten Gefährdung des Senders verbunden ist. Auch die Schnellabschalteinrichtung 17 bringt bei ihrer Aktivierung auf der Fernsteuerkonsole 18 Signale zur Anzeige oder kann von der Konsole aus aktiviert werden.

Schliesslich sei noch ein Grobpositionierungsspeicher 13 erwähnt, der vorgegebene Positionen der Stellmotore 9 und Abstimmelemente enthält, wie sie im Sendebetrieb üblicherweise eingenommen werden, und an die Motorsteuerung 12 abgibt, so dass die erwähnte Regelschleife über 12, 11, 9 und 8 nur noch die Feinpositionierung durchzuführen braucht.

Da die Mess- und Eingriffsstellen innerhalb des Senders 7 liegen und über eine Vielzahl von Steuer- und Signalleitungen mit den verschiedenen Funktionsblöcken in der Sendersteuerung 19 verbunden sind, ergeben sich bei dem bekannten Hochleistungs-Sender nach Fig. 1 aufgrund der umfangreichen Verkabelung auch eine Vielzahl von Störungsmöglichkeiten durch Einstrahlung von HF-Feldern oder transiente Vorgänge beim Schalten und Steuern der Senderstufen.

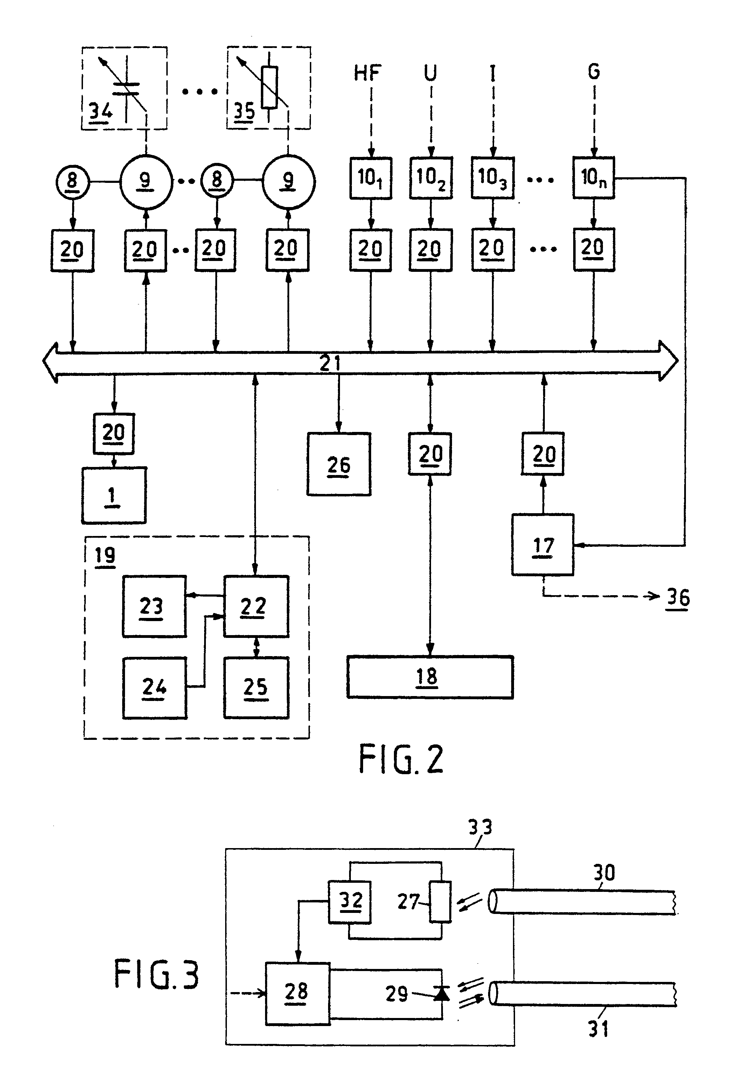

Diese Gefahr und damit der Aufwand an Entstörungsmassnahmen können bei dem erfindungsgemässen Hochleistungs-Sender nach Fig. 2 drastisch verringert werden. In Fig. 2 sind wiederum beispielhaft die Eingriffsstellen 34 und 35 mit entsprechenden Stellmotoren 9, die zur Stromversorgung des Senders gehörende Eingriffsstelle 36 sowie die Messstellen $10_1$ ... $10_n$ eingezeichnet. Der Sender 7 selbst ist allerdings aus Gründen der Uebersichtlichkeit weggelassen worden. Die Funktionen der Mess- und Eingriffsstellen aus Fig. 2 sind dieselben wie die Funktionen derjenigen aus Fig. 1.

In dem erfindungsgemässen Hochleistungs-Sender nach Fig. 2 erfolgt der Austausch der Daten und Befehle nicht wie bisher üblich über eine sternförmige, parallel arbeitende Netzstruktur von Signal- und Steuerleitungen, sondern vielmehr über einen gemeinsamen, seriell arbeitenden Daten- und Adressbus 21, der an allen Mess- und Eingriffsstellen vorbeigeführt ist und an den neben diesen Stellen auch die Sendersteuerung 19 angeschlossen ist.

Der serielle Datentransport auf dem Daten- und Adressbus, der vorteilhafterweise in vollständig digitaler Form vonstatten geht, erfordert eine zeitlich gestaffelte Abfrage der Messdaten aus den Messstellen und eine zeitlich gestaffelte Uebermittlung von Steuerbefehlen an die Eingriffsstellen. Die zeitliche Staffelung in der Uebertragung und Bearbeitung von Messdaten aus einer Vielzahl von Messstellen ist unproblematisch, da die im Sender ablaufenden zu überwachenden Vorgänge vergleichsweise langsam sind.

Die Organisation des Daten- und Befehlsaustausches zwischen der Sendersteuerung 19 und den Mess- und Eingriffsstellen $10_1$ ... $10_n$ und 34, 35, 36 übernimmt eine zentrale Recheneinheit 22 (ein zentraler Prozessor oder Central Processing Unit CPU), die in der Sendersteuerung 19 angeordnet ist und sowohl mit dem Daten- und Adressbus 21 als auch mit einer Datenausgabeeinheit 24, z.B. einem Sichtschirm oder Drucker, einer Dateneingabeeinheit 24, z.B. einem Tastenfeld, und einem Programmspeicher 25, z.B. einem Platten- oder Halbleiterspeicher, in Verbindung steht.

Jeder der Stellen, die am Daten- und Befehlsaustausch über den Daten- und Adressbus 21 teilnehmen, ist eine eigene Adresse, z.B. eine speziell aufgebaute Binärfolge, zugeordnet. Die zentrale Recheneinheit 22 fragt in einer vorgegebenen zeitlichen Abfolge die Daten aussendenden Stellen ab oder gibt Befehle an die Daten empfangenden Stellen ab, indem sie zunächst die zugehörige Adresse der gewünschten Stelle über den Daten- und Adressbus 21 aussendet. Damit die angerufene Stelle ihre spezifische Adresse erkennt, ist sie über einen adressierbaren Daten- und Steuerport 20 an den Daten- und Adressbus 21 angeschlossen. Dieser adressierbare Daten- und Steuerport 20 hat die Funktion, die eigene Adresse zu erkennen, in den gewünschten Zustand überzugehen und Meldungen in Form von Messdaten abzugeben oder Meldungen in Form von Steuerbefehlen entgegenzunehmen. Die Aktivierung des Daten- und Steuerports 20 erfolgt dabei in jedem Fall von der zentralen Recheneinheit 22 durch Aussenden der zugehörigen Adresse. Die Desaktivierung nach erfolgtem Datenaustausch kann entweder nach einer vorgegebenen Zeit durch den adressierbaren Daten- und Steuerport 20 automatisch erfolgen oder wiederum von der zentralen Recheneinheit 22 durch Aussenden eines allgemeinen Desaktivierungssignals gesteuert werden.

Wie in Fig. 2 dargestellt, sind die Positionsgeber 8, die Stellmotoren 9 und die Messstellen $10_1$ ... $10_n$ über einen eigenen adressierbaren Daten- und Steuerport 20 an den Daten- und Adressbus 21 angekoppelt. In gleicher Weise kann auch die in Halbleitertechnik ausgeführte Signalelektronik des Oszillators 1, die Fernsteuerungskonsole 18 und die Schnellabschalteinrichtung 17 an den gemeinsamen Bus angeschlossen werden.

Um die Schnellabschaltung der Stromversorgung über die Eingriffsstelle 36 unabhängig von dem jeweiligen Zustand des zeitlich gestaffelten Datenaustausches über den Daten- und Adressbus 21 möglichst ohne Verzögerung durchführen zu können, ist es von Vorteil, wenn gemäss einer Weiterbildung der Erfindung die Schnellabschalteinrichtung 17 von der als Grenzwertgeber ausgebildeten Messstelle $10_n$ über eine separate Steuerleitung angesteuert wird.

Neben der vereinfachten Verkabelung und damit auch vereinfachten Entstörmassnahmen hat der gemeinsame Daten- und Adressbus den Vorteil, dass alle ausgetauschten Daten in einfacher Weise zentral protokolliert werden können. Zu diesem Zweck ist ein Datenspeicher 26 vorgesehen, in dem alle ausgetauschten Daten mit den zugehörigen Adressen abgespeichert und für eine spätere Auswertung gesichert werden.

Als Daten- und Adressbus kann eine Vielzahl von Bussystemen verwendet werden, wie sie dem Fachmann aus der Technik der Datenverarbeitung und Rechnernetze bestens bekannt sind. Als Beispiel sei hier nur der sogenannte IEC-Bus angeführt, der nach der internationalen Norm IEC 625-1 (US-Norm IEEE 488/75) ausgelegt ist und auch als "General Purpose Interface Bus" (GPIB) bezeichnet wird.

Weitere Vorteile hinsichtlich der Störsicherheit ergeben sich, wenn die Uebertragung von Adressen und Daten innerhalb des Daten- und Adressbus über Koaxialleitungen erfolgt, weil die Koaxialleitungen selbst bereits eine erhöhte Störsicherheit aufweisen und daher die Abschirmmassnahmen am Daten- und Adressbus 21 unterstützen.

Besonders vorteilhaft ist jedoch die Verwendung von Lichtleitfasern für die Daten- und Adressenübertragung, weil die Beeinflussung der Lichtimpulse in den Lichtleitfasern durch elektromagnetische Störfelder vernachlässigbar klein ist. In diesem Fall werden die elektrischen Signale aus der zentralen Recheneinheit 22 oder den Messstellen $10_1$ ... $10_n$ zunächst in Lichtimpulse umgewandelt und durch an sich bekannte, optische Koppelelementein den Daten- und Adressbus 21 eingespeist. Auf die detaillierte Beschreibung der dafür notwendigen optoelektronischen Wandelelemente wird verzichtet, weil sie dem Fachmann aus dem weit entwickelten Gebiet der Optoelektronik und optischen Datenübertragung hinlänglich bekannt sind.

Weitere Verbesserungen in der Störsicherheit ergeben sich, wenn möglichst viele Messwerte mit Sensoren aufgenommen werden, bei denen weder eine Analog-Digitalwandlung noch eine elektrisch-optische Umwandlung erforderlich ist. So werden für die Positionsgeber 8 runde, rotierende Scheiben bevorzugt, die eine Winkelteilung aus binär codierten reflektierenden und nicht reflektierenden Strichen aufweisen und direkt optisch abgetastet werden können. Ebenso lassen sich zur Strommessung mit Vorteil magnetooptische Messwandler verwenden, bei denen die Drehung der Polarisationsebene durch das Magnetfeld des Stroms nach dem Prinzip der Faraday-Rotation gemessen und ausgewertet wird. Ein solcher Messwandler wird beispielsweise in der DE-OS 31 16 149 beschrieben.

Der Uebergang zu hauptsächlich optischen Messungen und optischer Datenübertragung führt zu einer Senkung der störbaren Elektronik und elektrischen Leitungen innerhalb des Senders. Die verbleibenden elektronischen Schaltungen können dann zusätzlich gegen Störungen gehärtet werden, wie dies am Beispiel einer Signalelektronik 28 in Fig. 3 dargestellt ist.

Die Signalelektronik 28 erhält am Eingang ein elektrisches oder optisches Signal z.B. eines Messwandlers innerhalb der Endstufe 4 des Senders 7. Sie verarbeitet dieses Signal und gibt die entsprechenden Daten über einen Optokoppler 29, beispielsweise eine lichtemittierende Diode, auf eine Signalfaser 31, die mit dem Daten- und Adressbus 21 in Verbindung steht. Die Stromversorgung der Signalelektronik 28 erfolgt über eine Energiefaser 30, aus der Licht hinreichender Intensität auf einen lichtelektrischen Wandler 27 fällt und dort in elektrische Energie umgewandelt wird. Um Schwankungen in der Stromversorgung auszugleichen, ist dem lichtelektrischen Wandler 27 bevorzugt noch ein Energiespeicher 32 in Form eines Akkumulators nachgeschaltet. Durch die optische Energieversorgung der Signalelektronik 28 entfallen störempfindliche elektrische Speiseleitungen, so dass die elektrischen Verbindungen der Signalelektronik, die vorzugsweise in einem Abschirmgehäuse 33 untergebracht ist, auf ein Minimum reduziert sind.

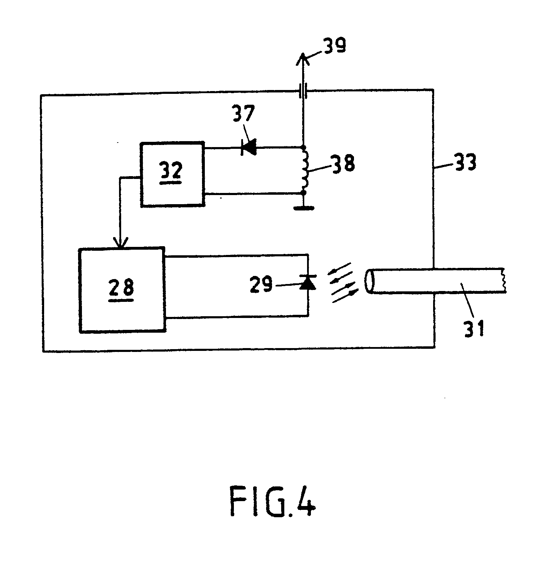

Ein weiteres bevorzugtes Ausführungsbeispiel für die Versorgung der Signalelektronik 28 innerhalb des Hochleistungs-Senders ist in Fig. 4 dargestellt. Die HF-Energie, die im Sender selbst mit sehr hohen Pegeln als Strahlung verfügbar ist, wird über ein Antennenelement 39 und ein Resonanzelement 38, z.B. eine Abstimmspule, aufgenommen und über einen HF-Gleichrichter 37 zur Ladung des Energiespeichers 32 verwendet. Besonders vorteilhaft ist dabei der unverhältnismässig viel bessere Wirkungsgrad gegenüber der optischen Energieversorgung nach Fig. 3.

Insgesamt zeichnet sich der erfindungsgemässe Hochleistungs-Sender mit automatischer Steuerung und Ueberwachung über einen gemeinsamen Daten- und Adressbus durch vereinfachte Verkabelung, erhöhte Störsicherheit und vor allem vergrösserte Flexibilität aus, da durch einfache Programmänderung für die zentrale Recheneinheit 22 die Steuerungsabläufe geändert, neue Mess- und Eingriffsstellen angeschlossen und mehrere Sender im Parallelbetrieb durch Zusammenschalten der Busleitungen über eine zentrale Konsole bedient werden können.

**Ansprüche**

1.  Hochleistungs-Sender mit automatischer Steuerung und Ueberwachung, der eine Mehrzahl von Messstellen ($10_1$ ... $10_n$) zur Messung verschiedener Betriebsparameter des Senders und eine Mehrzahl von Eingriffsstellen (34, 35, 36) zur Steuerung der Betriebsparameter in Abhängigkeit von den gemessenen Istwerten und vorgegebenen Sollwerten aufweist, sowie eine Sendersteuerung (19), die zum Austausch von Daten und Steuerbefehlen mit den Messstellen ($10_1$ ... $10_n$) und den Eingriffsstellen (34, 35, 36) verbunden ist, dadurch gekennzeichnet, dass für den Austausch der Daten und Steuerbefehle zwischen der Sendersteuerung (19) und den Messstellen ($10_1$ ... $10_n$) und Eingriffsstellen (34, 35, 36) ein gemeinsamer, seriell arbeitender Daten- und Adressbus (21) vorgesehen ist, jede der Mess- und Eingriffsstellen ($10_1$ ... $10_n$ bzw. 34, 35, 36) über einen adressierbaren Daten- und Steuerport (20) an den Daten- und Adressbus (21) angekoppelt ist, und in der Sendersteuerung (19) eine zentrale Recheneinheit (22) zur Steuerung des Daten- und Befehlsaustausches vorgesehen ist.

2.  Hochleistungs-Sender nach Anspruch 1, dadurch gekennzeichnet, dass der Daten- und Adressbus (21) als abgeschirmte Koaxialleitung ausgeführt ist.

3.  Hochleistungs-Sender nach Anspruch 1, dadurch gekennzeichnet, dass der Daten- und Adressbus (21) als Lichtleitfaser ausgeführt ist.

4.  Hochleistungs-Sender nach einem der Ansprüche 1 bis 3, dadurch gekennzeichnet, dass zumindest eine der Messstellen ($10_1$ ... $10_n$) als Grenzwertgeber ausgebildet ist, die Sendersteuerung (19) eine Schnellabschalteinrichtung (17) zum Schutz des Senders aufweist, und der Grenzwertgeber mit der Schnellabschalteinrichtung (17) durch eine separate Steuerleitung verbunden ist.

5.  Hochleistungs-Sender nach Anspruch 3, dadurch gekennzeichnet, dass die Signalelektronik (28) der Mess- und Eingriffsstellen ($10_1$ ... $10_n$ bzw. 34, 35, 36) in einem Abschirmgehäuse (33) untergebracht ist, und zur Stromversorgung der Signalelektronik (28) eine Energiefaser (30) vorgesehen ist, die innerhalb des Abschirmgehäuses (33) endet, und deren Licht durch einen lichtelektrischen Wandler (27) in einen Versorgungsstrom für die Signalelektronik (28) umgewandelt wird.

6.  Hochleistungs-Sender nach Anspruch 3, dadurch gekennzeichnet, dass die Signalelektronik (28) der Mess- und Eingriffsstellen ($10_1$ ... $10_n$ bzw. 34, 35, 36) in einem Abschirmgehäuse (33) untergebracht ist, und zur Stromversorgung der Signalelektronik (28) ein Antennenelement (39) vorgesehen ist, das zusammen mit einem Resonanzelement (38) Energie aus dem HF-Feld des Senders aufnimmt und über einen HF-Gleichrichter (37) an die Signalelektronik (28) weiterleitet.

7.  Hochleistungs-Sender nach einem der Ansprüche 1 bis 6, dadurch gekennzeichnet, dass für ausgewählte Eingriffsstellen (34, 35) Stellmotore (9) vorgesehen sind, die Stellmotore (9) mit entsprechenden Positionsgebern (8) starr verbunden sind und die Abtastung der Position in den Positionsgebern (8) auf optischen Wege erfolgt.

8.  Hochleistungs-Sender nach einem der Ansprüche 1 bis 7, dadurch gekennzeichnet, dass in den Messstellen zur Strommessung magnetoptische Messwandler nach dem Prinzip der Faraday-Rotation vorgesehen sind.

**Claims**

1.  High-power transmitter comprising automatic control and monitoring and provided with a plurality of measuring points ($10_1$ ... $10_n$) for measuring various operating parameters of the transmitter and a plurality of intervention points (34, 35, 36) for controlling the operating parameters as a function of the measured actual values and predetermined nominal values, and a transmitter control system (19) which, for exchanging data and control commands, is connected to the measuring points ($10_1$ ... $10_n$) and the intervention points (34, 35, 36); characterised in that, for the exchange of data and control commands, a common data and address bus (21), operating serially, is provided between the transmitter control system (19) and the measuring points ($10_1$ ... $10_n$) and intervention points (34, 35, 36), and each of the measuring and intervention points ($10_1$ ... $10_n$) and 34, 35, 36 respectively) is coupled via an addressable data and control port (20) to the data and address bus (21) and in the transmitter control system (1 9) a central processing unit (22) is provided for controlling the data and command exchange.

2. High-power transmitter according to Claim 1, characterised in that the data and address bus (21) is constructed as shielded coaxial line.

3. High-power transmitter according to Claim 1, characterised in that the data and address bus (21) is constructed as a fiber-optical waveguide.

4. High-power transmitter according to one of Claims 1 to 3, characterised in that at least one of the measuring points ($10_1$ ... $10_n$) is constructed as a limit-value pick-up, the transmitter control system (19) is provided with a quick-response switch-off device (17) for protecting the transmitter and the limit-value pick-up is connected via a separate control line to the quick-response switch-off device (17).

5. High-power transmitter according to Claim 3, characterised in that the electronic signal system (28) of the measuring and intervention points ($10_1$ ... $10_n$) and 34, 35, 36 respectively) is accommodated in a shielded housing (33) and, for supplying the electronic signal system (28) with power, an energy fiber (30) is provided which ends inside the shielded housing (33) and the light of which is converted by an opto-electric transducer (27) into a supply current for the electronic signal system (28).

6. High-power transmitter according to Claim 3, characterised in that the electronic signal system (28) of the measuring and intervention points ($10_1$ ... $10_n$) and 34, 35, 36 respectively) is accommodated in a shielded housing (33) and, for supplying the electronic signal system (28) with power, an antenna element (39) is provided which, together with a resonant element (38), absorbs energy from the RF field of the transmitter and passes this energy on to the electronic signal system (28) via an RF rectifier (37).

7. High-power transmitter according to one of Claims 1 to 6, characterised in that, for selected intervention points (34, 35), servomotors (9) are provided, the servomotors (9) are rigidly connected to corresponding position pick-ups (8) and the position is optically scanned in the position pick-ups (8).

8. High-power transmitter according to one of Claims 1 to 7, characterised in that at the measuring points for current measurement, magneto-optical transducers according to the principle of Faraday rotation are provided.

**Revendications**

1. Emetteur de grande puissance à commande et surveillance automatiques, qui présente une pluralité de points de mesure ($10_1$ ... $10_n$) pour la mesure de divers paramètres de fonctionnement de l'émetteur et une pluralité de points d'intervention (34, 35, 36) pour la commande des paramètres de fonctionnement en fonction des valeurs réelles mesurées et de valeurs de consigne prédéfinies, ainsi qu'une commande d'émetteur (19), qui est connectée, pour l'échange de données et d'ordres de commande, aux points de mesure ($10_1$ ... $10_n$) et aux points d'intervention (34, 35, 36), caractérisé en ce que, pour l'échange des données et des ordres de commande entre la commande d'émetteur (19) et les points de mesure ($10_1$ ... $10_n$) ainsi que les points d'intervention (34, 35, 36), un bus de données et d'adresses commun fonctionnant en série (21) est prévu, chacun des points de mesure et d'intervention ($10_1$ ... $10_n$) et 34, 35, 36) étant couplé, par l'intermédiaire d'un port de données et de commande adressable (20), au bus de données et d'adresses (21) et un processeur central (22) est prévu dans la commande d'émetteur (19) pour commander l'échange de données et d'ordres.

2. Emetteur de grande puissance suivant la revendication 1, caractérisé en ce que le bus de données et d'adresses (21) a la forme d'une ligne coaxiale blindée.

3. Emetteur de grande puissance suivant la revendication 1, caractérisé en ce que le bus de données et d'adresses (21) a la forme d'une fibre optique.

4. Emetteur de grande puissance suivant l'une quelconque des revendications 1 à 3, caractérisé en ce qu'au moins un des points de mesure ($10_1$ ... $10_n$) a la forme d'un capteur de valeur limite, la commande d'émetteur (19) comporte un dispositif de déclenchement rapide (17) pour la protection de l'émetteur et le capteur de valeur limite est connecté au dispositif de déclenchement rapide (17) par une ligne de commande séparée.

5. Emetteur de grande puissance suivant la revendication 3, caractérisé en ce que l'électronique d'acheminement de signaux (28) des points de mesure et d'intervention ($10_1$ ... $10_n$ et 34, 35, 36) est logée dans un boîtier de blindage (33) et, pour l'alimentation électrique de l'électronique d'acheminement de signaux (28) est prévue une fibre énergétique (30) qui se termine à l'intérieur du boîtier de blindage (33) et dont la lumière est convertie par un convertisseur photoélectrique (27) en un courant d'alimentation pour l'électronique d'acheminement de signaux (28).

6. Emetteur de grande puissance suivant la revendication 3, caractérisé en ce que l'électronique d'acheminement de signaux (28) des points de mesure et d'intervention ($10_1$ ... $10_n$ et 34, 35, 36) est logée dans un boîtier de blindage (33) et, pour l'alimentation électrique de l'électronique d'acheminement de signaux (28) est prévu un élément d'antenne (39) qui, conjointement avec un élément de résonance (38), reçoit de l'énergie du champ HF de l'émetteur et la transmet, par l'intermédiaire d'un redresseur HF (37), à l'électronique d'acheminement de signaux (28).

7. Emetteur de grande puissance suivant l'une quelconque des revendications 1 à 6, caractérisé en ce que, pour des points d'intervention (34, 35) sélectionnés, sont prévus des moteurs de positionnement (9) qui sont reliés rigidement à des capteurs de position correspondants (8) et l'analyse de la position dans les capteurs de position (8) s'effectue par voie optique.

8. Emetteur de grande puissance suivant l'une quelconque des revendications 1 à 7, caractérisé en ce que des transducteurs de mesure magnéto-optiques sont prévus dans les points de mesure pour la mesure du courant d'après le principe de la rotation de Faraday.

FIG.1

FIG.2

FIG.3

FIG.4